# EUROPEAN PATENT SPECIFICATION

(11) **EP 3 708 807 B1**
(45) Date of publication and mention of the grant of the patent: **31.08.2022**
(21) Application number: 20157567.7
(22) Date of filing: 17.02.2020
(51) Int. Cl.: F02C 6/08, F02K 3/075, F01D 17/14

(54) **LOUVRE SYSTEM**
LAMELLENSYSTEM
SYSTÈME DE LAMELLES

(30) Priority: 14.03.2019 GB 201903465
(43) Date of publication of application: 16.09.2020
(73) Proprietor: Rolls-Royce plc, London N1 9FX (GB)
(72) Inventor: Kulkarni, Davendu, Derby, Derbyshire DE24 8BJ (GB)
(74) Representative: Rolls-Royce plc

(56) References cited:
- FR-A1- 3 037 617
- GB-A- 2 467 120
- US-A- 5 706 649
- US-A1- 2019 003 390
- US-B2- 7 717 368

## Description

The present disclosure relates to a louvre system for a gas turbine engine. In particular, but not exclusively, the louvre system may be used to extract from a compressor, and introduce into a bypass duct, bleed air; or to extract air from the bypass duct and introduce it into a conduit to provide cooling air for a turbine or other systems of the gas turbine engine.

Bleed valves, as fitted on the external casing of intermediate and high pressure compressors of a gas turbine engine, are used to force excess compressor air into the bypass duct of the engine. Bleed valves may be located downstream of the outlet guide vanes of the engine, with their axial position determined by the engine architecture. In typical current engine architectures, the axial location of a bleed valve may be close to the trailing edge of an outlet guide vane, and may be directly in front of a bifurcation in airflow caused by a structural pylon component in the bypass duct.

Bleed valves may be scheduled to operate over a range of operating conditions, and may in some circumstances be open during high speed, high thrust flight conditions. In such conditions, high temperature air is blown into the bypass duct, which produces significant flow distortions in the bypass flow. These flow distortions can propagate upstream and lead to the buffeting of the outlet guide vanes and can increase fan forcing to an unacceptable level.

US 5706649 relates a thrust reversing apparatus for diverting purely rearwardly directed air flowing through an engine nacelle to combined rearward-and-radially-outward flow, and then to a combination of various radially outward angles and forward flow, where in the latter states thrust reversal is effected. The apparatus includes parallel inner and outer air flow blocking members driven by actuators which are coupled to the blocking members for effecting synchronous movement. The inner member includes a first door having fixed vanes and a solid second door pivotably coupled to the first door. The inner member has a closed position in which the two doors are collinear, and various open positions in which the two doors are pivoted relative to one another. The outer member comprises an array of pivotable, parallel vanes, and has a closed position in which the vanes tightly overlap, and various open positions in which the vanes are pivoted out of contact with each other through various amounts of rotation.

US 7717368 B2 relates to a vehicle, comprising: a vehicle frame; a duct carried by the vehicle frame with the longitudinal axis of the duct perpendicular to the longitudinal axis of the vehicle frame; a propeller rotatably mounted within the duct about the longitudinal axis of the duct to force an ambient fluid through from an inlet at the upper end of the duct through an exit at the lower end of the duct, and thereby produce an upward lift force applied to the vehicle; a first plurality of substantially parallel, spaced vanes non-pivotally mounted across at least the inlet end of the duct; and fluidic means for affecting the ambient fluid flow around the vanes to generate horizontal force components to the lift force applied to the vehicle.

FR 3037617 relates to a hub of an intermediate casing for a bypass turbomachine comprising: - a bleed stream duct, - a bleed valve, comprising a mobile door at the inlet orifice to the bleed stream duct, - a set of bleed vanes which are mounted with the ability to rotate about a pivot in the bleed stream duct between an open configuration in which a flow of air coming from the inlet orifice passes between the bleed vanes and a closed configuration, the pivot for each bleed vane being closer to its leading edge than to its trailing edge.

In accordance with a first aspect there is provided a gas turbine engine for an aircraft comprising:
an engine core comprising a turbine, a compressor, and a core shaft connecting the turbine to the compressor;
a fan located upstream of the engine core, the fan comprising a plurality of fan blades;
a bypass duct downstream of the fan;
a bleed conduit arranged to receive bleed air from the compressor; and
a louvre assembly comprising:
   an air discharge opening;
   a first louvre extending across a first portion of the discharge opening and comprising a first plurality of slats each pivotably mounted to rotate about a first direction between a closed position to obstruct air flowing through the first portion of the discharge opening and an open position to allow air to flow through the first portion of the air discharge opening; and
   a second louvre extending across a second portion of the air discharge opening and comprising a second plurality of slats each pivotably mounted to rotate about a second direction between a closed position to obstruct air flowing through the second portion of the air discharge opening and an open position to allow air to flow through the second portion of the air discharge opening,
wherein the first and second directions are angled relative to each other such that air exiting through the air discharge opening with the first and second plurality of slats in the open position diverges away from a central axis of the louvre assembly extending between the first and second portions of the air discharge opening, and
wherein the discharge opening is arranged to direct bleed air from the bleed conduit into the bypass duct with the first and second pluralities of slats in the open position.

The gas turbine engine may further comprise a plurality of fan outlet guide vanes and a pylon, arranged in the bypass duct downstream of the fan outlet guide vanes. The air discharge opening may be arranged downstream of the fan outlet guide vanes and upstream of the pylon.

The central axis of the louvre assembly may be aligned with a central axis of the pylon.

In accordance with a second aspect there is provided a gas turbine engine for an aircraft comprising:
an engine core comprising a turbine, a compressor, and a core shaft connecting the turbine to the compressor;
a fan located upstream of the engine core, the fan comprising a plurality of fan blades;
a bypass duct downstream of the fan;
a conduit arranged to receive air from the bypass duct; and
a louvre assembly comprising:
   an air discharge opening;
   a first louvre extending across a first portion of the discharge opening and comprising a first plurality of slats each pivotably mounted to rotate about a first direction between a closed position to obstruct air flowing through the first portion of the discharge opening and an open position to allow air to flow through the first portion of the air discharge opening; and
   a second louvre extending across a second portion of the air discharge opening and comprising a second plurality of slats each pivotably mounted to rotate about a second direction between a closed position to obstruct air flowing through the second portion of the air discharge opening and an open position to allow air to flow through the second portion of the air discharge opening,
wherein the first and second directions are angled relative to each other such that air exiting through the air discharge opening with the first and second plurality of slats in the open position diverges away from a central axis of the louvre assembly extending between the first and second portions of the air discharge opening, and
wherein the discharge opening is arranged to extract air from the bypass duct with the first and second pluralities of slats in the open position and direct the extract air into the conduit.

The conduit may provide cooling air for the turbine.

For example, the louvre assembly of the first aspect may be used in a compressor bleed system. Configuring the louvre assembly such that bleed air exits in diverging directions allows bleed air to be introduced into, or extracted from, the bypass duct of an engine with minimal disruption to air flow.

The first plurality of slats may be each pivotably mounted to rotate about a respective first axis. The first axes may be parallel to the first direction.

The second plurality of slats may be each pivotably mounted to rotate about a respective second axis. The second axes may be parallel to the second direction.

An angle between the first direction and the second direction may for example be between around 5 degrees and around 30 degrees from parallel.

An angle between the first direction and the central axis may be between around 75 degrees and 85 degrees.

An angle between the second direction and the central axis may be between around 75 degrees and 85 degrees.

The first and second louvres may be symmetrically arranged about the central axis.

The louvre assembly may further comprise an actuation mechanism connecting the first and second louvres for synchronous rotation between the open and closed positions. The actuation mechanism may comprise an actuator connected to an actuation rod configured to cause rotation of the first and second pluralities of slats between the open and closed positions.

The first and second pluralities of slats may be arranged to be aligned in the open position at an angle of between 10 and 45 degrees relative to a plane extending across the air discharge opening. For example, the first and second pluralities of slats may be arranged to be aligned in the open position at an angle of between 30 and 45 degrees relative to a plane extending across the air discharge opening. In an embodiment, for example for introducing bleed air into a bypass duct, the angle may be between 30 and 45 degrees. In a further embodiment, for example for extracting air from a bypass duct, the angle may be between 10 and 35 degrees.

The gas turbine engine may further comprise a gearbox that receives an input from the core shaft and outputs drive to the fan so as to drive the fan at a lower rotational speed than the core shaft.

With the turbine a first turbine, the compressor a first compressor, and the core shaft a first core shaft, the engine core may further comprise a second turbine, a second compressor, and a second core shaft connecting the second turbine to the second compressor, the second turbine, second compressor, and second core shaft being arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4.2, for example on the order of or at least 3, 3.1, 3.2, 3.3, 3.4, 3.5, 3.6, 3.7, 3.8, 3.9, 4, 4.1 or 4.2. The gear ratio may be, for example, between any two of the values in the previous sentence. A higher gear ratio may be more suited to "planetary" style gearbox. In some arrangements, the gear ratio may be outside these ranges.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, 17, 17.5, 18, 18.5, 19, 19.5 or 20. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a bladed disc or a bladed ring. Any suitable method may be used to manufacture such a bladed disc or bladed ring. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a schematic plan view of an example louvre assembly;
Figure 5 is a schematic sectional view through a bypass duct of a gas turbine engine, with a louvre assembly positioned behind a series of outlet guide vanes;
Figure 6 is a schematic sectional view of an example louvre assembly in position for providing a bleed air flow into a bypass duct;
Figure 7 is a schematic sectional view of an alternative example louvre assembly in position for extracting air flow from a bypass duct;
Figure 8 is a schematic plan view of an example louvre assembly with an actuation mechanism;
Figure 9 is a schematic sectional view of an example actuation mechanism for a louvre assembly;
Figure 10 is a schematic sectional view of an alternative example actuation mechanism for a louvre assembly; and
Figure 11 is a schematic sectional view of an example actuation mechanism for a louvre assembly for extracting air flow from a bypass duct.

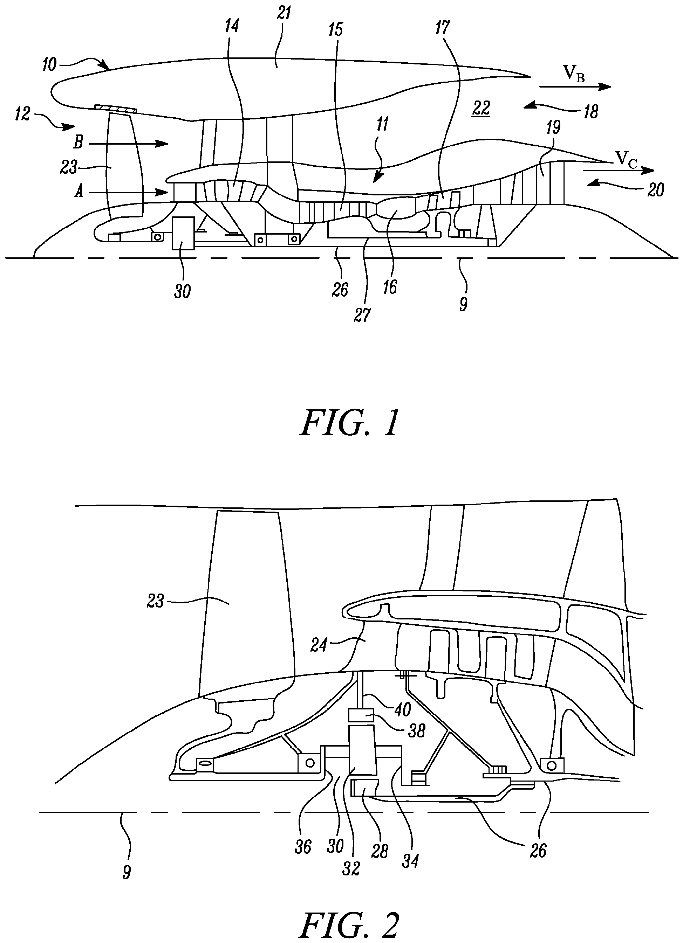

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

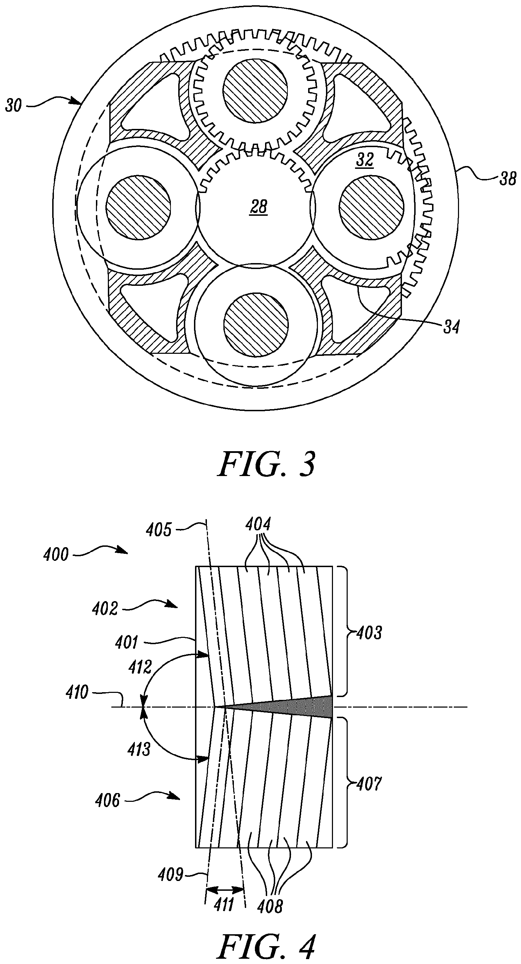

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Figure 4 is a schematic plan view of an example louvre assembly 400 for a gas turbine engine, for example for a gas turbine engine bleed system. The louvre assembly 400 comprises an air discharge opening 401, which surrounds first and second louvres 402, 406. The first louvre 402 extends across a first portion 403 of the air discharge opening 401, while the second louvre 406 extends across a second portion 407 of the air discharge opening 401. Each louvre 402, 406 comprises a respective plurality of slats 404, 408, which are pivotably mounted to rotate about respective first and second rotational axes between a closed position in which air is obstructed from flowing through the first and second portions 403, 407 of the air discharge opening 401 and an open position in which air is allowed to flow through the first and second portions 403, 407 of the air discharge opening 401. The first rotational axes are mutually parallel to a first direction 405. The second rotational axes are mutually parallel to a second direction 409.

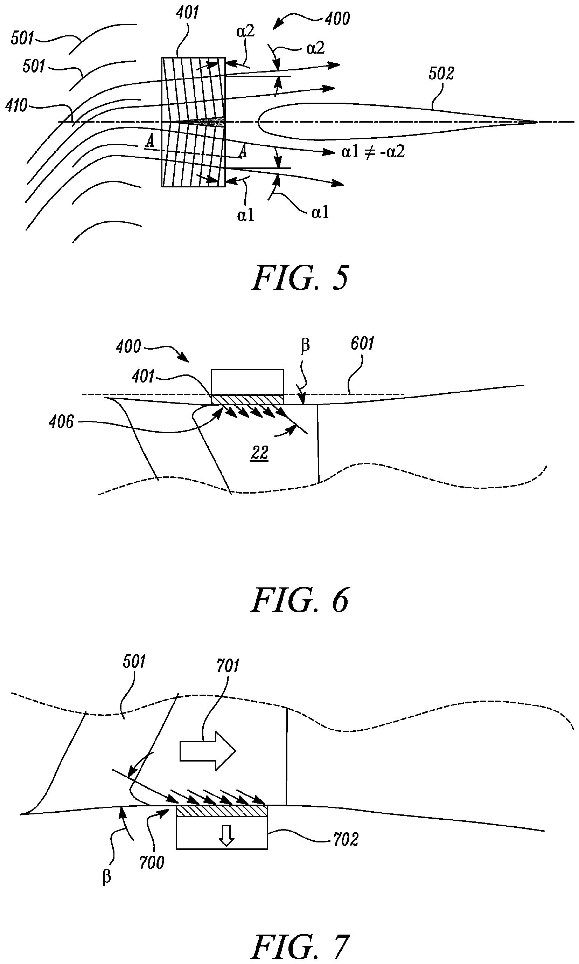

The first direction 405 is angled relative to the second direction 409 such that air, for example bleed air, exiting through the air discharge opening 401 with the first and second plurality of slats 404, 408 in the open position diverges away from a central axis 410 of the louvre assembly 400, the central axis 410 extending between the first and second portions 403, 407 of the air discharge opening 401. An angle 411 between the first and second directions 405, 409 may for example be between 10 and 30 degrees, and in particular embodiments may be between 12 and 24 degrees. Each direction 405, 409 may for example be aligned at an angle 412, 413 of between 75 and 85 degrees, optionally between 78 and 84 degrees, relative to the central axis 410, i.e. at an angle α1, α 2 (Figure 5) of between 5 and 15 degrees, optionally between 6 and 12 degrees, to a plane orthogonal to the central axis 410.

In the example shown in Figure 4, the louvre assembly 400 is symmetrically arranged about the central axis 410, i.e. the angles of the first and second directions 405, 409 to the central axis 410 are the same. This feature is advantageous when the louvre assembly 400 is positioned ahead of a symmetrically placed obstruction such as an engine core support pylon, as shown in further detail below. In some examples the angles may be selected to be different, depending on the prevailing direction of airflow in the bypass duct.

Figure 5 illustrates the louvre assembly 400 in position within a bypass duct of a gas turbine engine between a series of outlet guide vanes 501 and a centrally positioned pylon 502 for supporting the engine core of the gas turbine engine. Angles α 1, α 2 are chosen to closely match the direction of air flow from the outlet guide vanes 501 and so that air, for example bleed air, exiting the louvre assembly 400 is aligned to diverge either side of the pylon 502, thereby reducing disturbance to the air flow in the bypass duct when bleed air is introduced. In this case, angles α 1, α 2 are equal in magnitude and opposite in direction relative to the central axis 410 of the louvre assembly 400, which coincides with the central axis of the pylon 502.

The outlet guide vanes (OGVs) are designed to divert air flow away from pylons to reduce the pressure disturbance generated by pylons reaching to the fan blades upstream of the OGVs. Therefore, the fan OGVs tend to have a cyclic stagger and camber pattern, in which each OGV has a different exit flow angle depending on its position in the annulus and proximity to the pylon. The OGVs leave some residual swirl into the bypass duct and hence generate the flow exit angles α 1, α 2 as shown in Figure 5. To minimise disruption of air flow when introducing bleed air, these same angles can be used for the orientation of the slats in the louvre assembly. The angles will only be zero when the structural components such as pylons or struts are not present in the flow field. In practice, the exit flow angles are always present behind the stator vanes of any spool of the axial flow machine of all gas turbines.

A louvre assembly of the type described herein may also be used for air offtake locations between the intermediate compressor OGVs and intercase struts in the intermediate pressure compressor (IPC), air offtakes for IP bleeds and air offtakes on the pylon walls, used for other functions such as pre-coolers and heat-exchangers.

A section through the portion of the louvre assembly 400 marked A-A in Figure 5 is shown in Figure 6, with the second louvre 406 in an open position to allow air to flow through the air discharge opening 401. Each slat in the second louvre is oriented such that a plane of each slat is aligned at an angle β relative to a plane 601 of the louvre assembly 400. The angle β may for example be within the range of 30 to 45 degrees relative to the plane 601, the angle being a balance between maximising air flow through the opening 401 and minimising disruption of the air flow in the bypass duct 22. Optimising this angle avoids flow blockage and pressure disturbances in the bypass duct.

In an alternative arrangement, illustrated in Figure 7, a louvre assembly 700 may be positioned and arranged to extract air from, rather than introduce air into, a bypass duct of a gas turbine engine. The slats of the louvre assembly 700 are in this arrangement aligned against the direction of air flow 701 in the bypass duct, and may be aligned at an angle β of between 10 and 35 degrees to the plane of the louvre assembly 700. The plane of the louvre assembly 700 may be parallel to the central axis 9 of the gas turbine engine (see for example Figure 1), or may be aligned at an angle to match an angle of a portion of the bypass duct in which the louvre assembly 700 is mounted. In the example of Figure 7, the louvre assembly 700 is mounted downstream of the outlet guide vanes 501, and may be connected to extract air from the bypass duct to a conduit 702 to provide cooling air for the turbine or other systems.

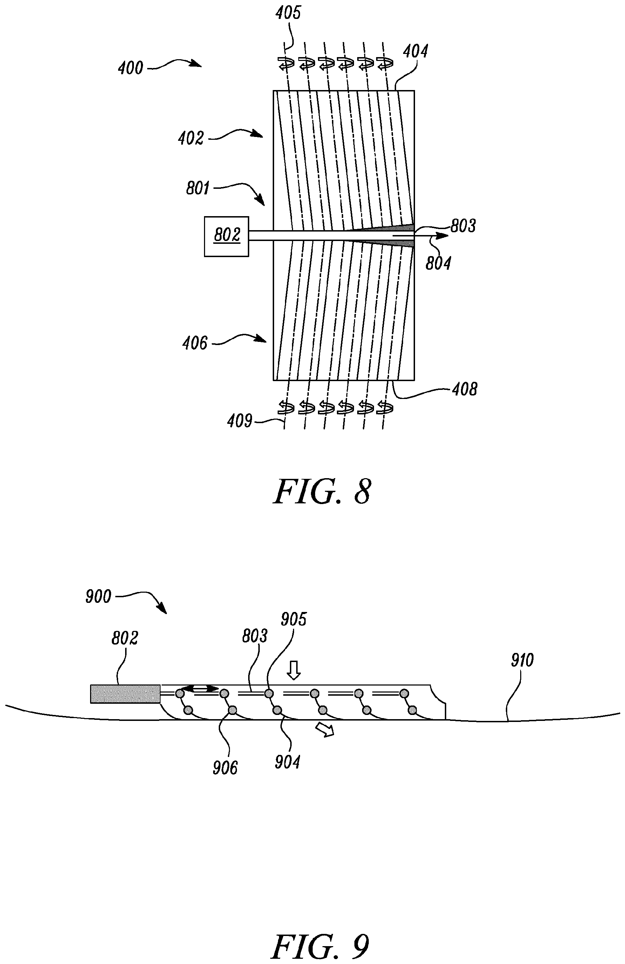

Figure 8 illustrates schematically the louvre assembly 400 described above, comprising an actuation mechanism 801 that connects the first and second louvres 402, 406 for synchronous rotation of the first and second plurality of slats 404, 408 between the open and closed positions. The actuation mechanism comprises an actuator 802, which may for example be a linear actuator, connected to an actuator rod 803 connecting each of the slats 404, 408 to the actuator 802. When the actuator is operated to move the rod 803 in the direction 804 shown, each of the slats 404, 408 rotate about their respective axes (either along the first or second direction 405, 409) to move the slats between the open and closed positions.

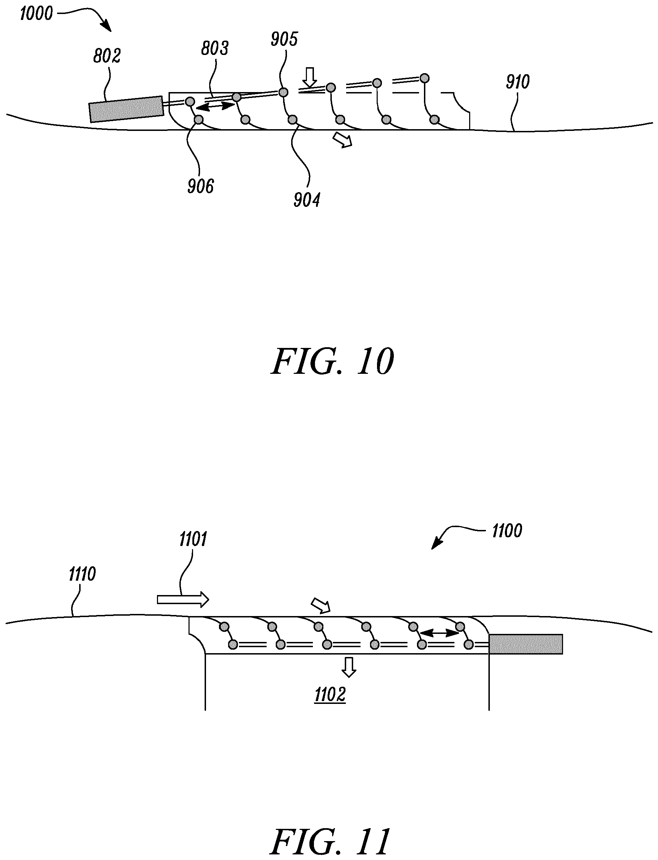

Figures 9 and 10 illustrate more detailed schematic arrangements for actuating slats of a louvre assembly 900, 1000 with a linear actuator 802 and an actuator rod 803, the louvre assembly 900, 1000 in each case being mounted in line with an inner annular surface 910 of a bypass duct. The actuator rod 803 in each case is attached to each of the slats 904 of the louvre assembly 900, 1000 with a pin joint 905, and each slat or vane 904 is mounted to rotate about a pivot 906. In the example shown in Figure 9, actuation of the rod 803 causes each of the vanes 904 to actuate simultaneously by the same amount. In the example shown in Figure 10, actuation of the rod 803 causes the slats 904 to actuate by differing amounts due to a gradual change in distance between the pin joint 905 and pivot 906 for each slat 904, causing the slats nearer the actuator 802 to actuate by a larger amount than the slats further away from the actuator 802.

Figure 11 illustrates schematically an alternative arrangement for a louvre assembly 1100 mounted in line with an annular surface 1110 of a bypass duct, the louvre assembly 1100 in this case being arranged to extract air from the bypass duct. The constructional details of the louvre assembly 1100 are similar to that shown in Figure 9. Air flow 1101 from the bypass duct is directed through the louvre assembly 1100 and into a conduit 1102 for providing an air flow to another system on the engine or elsewhere. The annular surface 1110 to which the louvre assembly 1100 is mounted may be parallel to the engine axis, as in Figure 11, or may be aligned at an angle to the engine axis, corresponding to a conical surface annular surface of the bypass duct.

The specific arrangement of louvres shown herein may result in the louvres being placed exactly in front of the lower bifurcation, i.e. at the bottom dead centre of the engine. Conventionally, air bleeds are generally not placed in proximity to pylons because this can result in air flow disruption. However, the design of louvre assembly described herein allows the assembly to be placed in close proximity to pylons, and has the added advantage of allowing any water collected in the core compressor stages to be diverted into the bypass duct.

It will be understood that the invention is not limited to the embodiments above-described and various modifications and improvements can be made without departing from the scope of the claims.

## Claims

1. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades;
a bypass duct (22) downstream of the fan (23);
a bleed conduit arranged to receive bleed air from the compressor (14); and
a louvre assembly comprising:
an air discharge opening (401);
a first louvre (402) extending across a first portion (403) of the air discharge opening (401) and comprising a first plurality of slats (404) each pivotably mounted to rotate about a first direction (405) between a closed position to obstruct air flowing through the first portion (403) of the air discharge opening (401) and an open position to allow air to flow through the first portion (403) of the air discharge opening (401); and
a second louvre (406) extending across a second portion (407) of the air discharge opening (401) and comprising a second plurality of slats (408) each pivotably mounted to rotate about a second direction (409) between a closed position to obstruct air flowing through the second portion (407) of the air discharge opening (401) and an open position to allow air to flow through the second portion (407) of the air discharge opening (401), wherein the discharge opening is arranged to direct bleed air from the bleed conduit into the bypass duct with the first and second pluralities of slats in the open position,
**characterised in that** the first and second directions (405, 409) are angled relative to each other such that air exiting through the air discharge opening (401) with the first and second plurality of slats (404, 408) in the open position diverges away from a central axis (410) of the louvre assembly (400) extending between the first and second portions (403, 407) of the air discharge opening (401).

2. The gas turbine engine (10) of claim 1, further comprising
a plurality of fan outlet guide vanes (501); and
a pylon (502), arranged in the bypass duct (22) downstream of the fan outlet guide vanes (501),
wherein the air discharge opening (401) is arranged downstream of the fan outlet guide vanes (501) and upstream of the pylon (502).

3. The gas turbine engine (10) of claim 2, wherein the central axis (410) of the louvre assembly (400) is aligned with a central axis of the pylon (502).

4. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades;
a bypass duct (22) downstream of the fan (23);
a conduit arranged to receive air from the bypass duct (22); and
a louvre assembly comprising:
an air discharge opening (401);
a first louvre (402) extending across a first portion (403) of the air discharge opening (401) and comprising a first plurality of slats (404) each pivotably mounted to rotate about a first direction (405) between a closed position to obstruct air flowing through the first portion (403) of the air discharge opening (401) and an open position to allow air to flow through the first portion (403) of the air discharge opening (401); and
a second louvre (406) extending across a second portion (407) of the air discharge opening (401) and comprising a second plurality of slats (408) each pivotably mounted to rotate about a second direction (409) between a closed position to obstruct air flowing through the second portion (407) of the air discharge opening (401) and an open position to allow air to flow through the second portion (407) of the air discharge opening (401), wherein the discharge opening is arranged to extract air from the bypass duct (22) with the first and second pluralities of slats (404, 408) in the open position and direct the extract air into the conduit (702, 1102),
**characterised in that** the first and second directions (405, 409) are angled relative to each other such that air exiting through the air discharge opening (401) with the first and second plurality of slats (404, 408) in the open position diverges away from a central axis (410) of the louvre assembly (400) extending between the first and second portions (403, 407) of the air discharge opening (401).

5. The gas turbine engine (10) of claim 4 wherein the first and second pluralities of slats (404, 408) are arranged to be aligned in the open position at an angle of between 10 and 35 degrees relative to a plane extending across the air discharge opening (401).

6. The gas turbine engine (10) of any one of claims 4 and 5, wherein the conduit (702, 1102) provides cooling air for the turbine (19).

7. The gas turbine engine (10) of any of the preceding claims wherein an angle (411) between the first direction (405) and second direction (409) is between 10 and 30 degrees.

8. The gas turbine engine (10) of any of the preceding claims wherein an angle (412) between the first direction (405) and the central axis (410) is between 75 and 85 degrees.

9. The gas turbine engine (10) of any of the preceding claims wherein an angle (413) between the second direction (409) and the central axis (410) is between 75 and 85 degrees.

10. The gas turbine engine (10) of any of the preceding claims wherein the first and second louvres (402, 406) are symmetrically arranged about the central axis (410).

11. The gas turbine engine (10) of any of the preceding claims comprising an actuation mechanism (701) connecting the first and second louvres (402, 406) for synchronous rotation of the first and second plurality of slats (404, 408) between the open and closed positions.

12. The gas turbine engine (10) of claim 11, further comprising an actuator (702) connected to an actuator rod (703) configured to cause rotation of the first and second pluralities of slats (404, 408) between the open and closed positions.

13. The gas turbine engine (10) of any of the preceding claims wherein the first and second pluralities of slats (404, 408) are arranged to be aligned in the open position at an angle of between 10 and 45 degrees relative to a plane extending across the air discharge opening (401).

14. The gas turbine engine (10) of claim 13 wherein the first and second pluralities of slats (404, 408) are arranged to be aligned in the open position at an angle of between 30 and 45 degrees relative to a plane extending across the air discharge opening (401).

## Patentansprüche

1. Gasturbinentriebwerk (10) für ein Luftfahrzeug, umfassend:
einen Triebwerkskern (11), der eine Turbine (19), einen Verdichter (14) und eine Kernwelle (26), welche die Turbine mit dem Verdichter verbindet, umfasst;
einen Lüfter (23), der sich stromaufwärts des Triebwerkkerns befindet, wobei der Lüfter eine Vielzahl von Lüfterschaufeln umfasst;
einen Umgehungskanal (22) stromabwärts des Lüfters (23);
eine Abzapfleitung, die angeordnet ist, um Abzapfluft von dem Verdichter (14) zu empfangen; und
eine Lamellenbaugruppe, die Folgendes umfasst:
eine Luftaustrittsöffnung (401);
eine erste Lamelle (402), die sich über einen ersten Abschnitt (403) der Luftaustrittsöffnung (401) erstreckt und eine erste Vielzahl von Stäben (404) umfasst, die jeweils schwenkbar montiert sind, um sich um eine erste Richtung (405) zwischen einer geschlossenen Position, um zu verhindern, dass Luft durch den ersten Abschnitt (403) der Luftaustrittsöffnung (401) strömt, und einer offenen Position, um zu ermöglichen, dass Luft durch den ersten Abschnitt (403) der Luftaustrittsöffnung (401) strömt, zu drehen; und
eine zweite Lamelle (406), die sich über einen zweiten Abschnitt (407) der Luftaustrittsöffnung (401) erstreckt und eine zweite Vielzahl von Stäben (408) umfasst, die jeweils schwenkbar montiert sind, um sich um eine zweite Richtung (409) zwischen einer geschlossenen Position, um zu verhindern, dass Luft durch den zweiten Abschnitt (407) der Luftaustrittsöffnung (401) strömt, und einer offenen Position, um zu ermöglichen, dass Luft durch den zweiten Abschnitt (407) der Luftaustrittsöffnung (401) strömt, zu drehen, wobei die Luftaustrittsöffnung dazu angeordnet ist, Abzapfluft von der Abzapfleitung in den Umgehungskanal zu leiten, wobei sich die erste und zweite Vielzahl von Stäben in der offenen Position befinden,
**dadurch gekennzeichnet, dass** die erste und zweite Richtung (405, 409) bezogen aufeinander abgewinkelt sind, sodass Luft, die durch die Luftaustrittsöffnung (401) austritt, wobei sich die erste und zweite Vielzahl von Stäben (404, 408) in der offenen Position befinden, von einer Mittelachse (410) der Lamellenbaugruppe (400) weg divergiert, die sich zwischen dem ersten und zweiten Abschnitt (403, 407) der Luftaustrittsöffnung (401) erstreckt.

2. Gasturbinentriebwerk (10) nach Anspruch 1, ferner umfassend:
eine Vielzahl von Lüfterauslassleitschaufeln (501); und
einen Pfeiler (502), der stromabwärts der Lüfterauslassleitschaufeln (501) in dem Umgehungskanal (22) angeordnet ist,
wobei die Luftaustrittsöffnung (401) stromabwärts der Lüfterauslassleitschaufeln (501) und stromaufwärts des Pfeilers (502) angeordnet ist.

3. Gasturbinentriebwerk (10) nach Anspruch 2, wobei die Mittelachse (410) der Lamellenbaugruppe (400) mit einer Mittelachse des Pfeilers (502) ausgerichtet ist.

4. Gasturbinentriebwerk (10) für ein Luftfahrzeug, umfassend:
einen Triebwerkskern (11), der eine Turbine (19), einen Verdichter (14) und eine Kernwelle (26), welche die Turbine mit dem Verdichter verbindet, umfasst;
einen Lüfter (23), der sich stromaufwärts des Triebwerkkerns befindet, wobei der Lüfter eine Vielzahl von Lüfterschaufeln umfasst;
einen Umgehungskanal (22) stromabwärts des Lüfters (23);
eine Leitung, die dazu angeordnet ist, Luft von dem Umgehungskanal (22) aufzunehmen; und
eine Lamellenbaugruppe, die Folgendes umfasst:
eine Luftaustrittsöffnung (401);
eine erste Lamelle (402), die sich über einen ersten Abschnitt (403) der Luftaustrittsöffnung (401) erstreckt und eine erste Vielzahl von Stäben (404) umfasst, die jeweils schwenkbar montiert sind, um sich um eine erste Richtung (405) zwischen einer geschlossenen Position, um zu verhindern, dass Luft durch den ersten Abschnitt (403) der Luftaustrittsöffnung (401) strömt, und einer offenen Position, um zu ermöglichen, dass Luft durch den ersten Abschnitt (403) der Luftaustrittsöffnung (401) strömt, zu drehen; und
eine zweite Lamelle (406), die sich über einen zweiten Abschnitt (407) der Luftaustrittsöffnung (401) erstreckt und eine zweite Vielzahl von Stäben (408) umfasst, die jeweils schwenkbar montiert sind, um sich um eine zweite Richtung (409) zwischen einer geschlossenen Position, um zu verhindern, dass Luft durch den zweiten Abschnitt (407) der Luftaustrittsöffnung (401) strömt, und einer offenen Position, um zu ermöglichen, dass Luft durch den zweiten Abschnitt (407) der Luftaustrittsöffnung (401) strömt, zu drehen, wobei die Luftaustrittsöffnung dazu angeordnet ist, Luft aus dem Umgehungskanal (22) abzulassen, wobei sich die erste und zweite Vielzahl von Stäben (404, 408) in der offenen Position befinden und die Abluft in den Kanal (702, 1102) leiten,
**dadurch gekennzeichnet, dass** die erste und zweite Richtung (405, 409) bezogen aufeinander abgewinkelt sind, sodass Luft, die durch die Luftaustrittsöffnung (401) austritt, wobei sich die erste und zweite Vielzahl von Stäben (404, 408) in der offenen Position befinden, von einer Mittelachse (410) der Lamellenbaugruppe (400) weg divergiert, die sich zwischen dem ersten und zweiten Abschnitt (403, 407) der Luftaustrittsöffnung (401) erstreckt.

5. Gasturbinentriebwerk (10) nach Anspruch 4, wobei die erste und zweite Vielzahl von Stäben (404, 408) dazu angeordnet sind, in der offenen Position in einem Winkel zwischen 10 und 35 Grad bezogen auf eine Ebene ausgerichtet zu sein, die sich über die Luftaustrittsöffnung (401) erstreckt.

6. Gasturbinentriebwerk (10) nach einem der Ansprüche 4 und 5, wobei die Leitung (702, 1102) Kühlluft für die Turbine (19) bereitstellt.

7. Gasturbinentriebwerk (10) nach einem der vorhergehenden Ansprüche, wobei ein Winkel (411) zwischen der ersten Richtung (405) und der zweiten Richtung (409) zwischen 10 und 30 Grad liegt.

8. Gasturbinentriebwerk (10) nach einem der vorhergehenden Ansprüche, wobei ein Winkel (412) zwischen der ersten Richtung (405) und der Mittelachse (410) zwischen 75 und 85 Grad liegt.

9. Gasturbinentriebwerk (10) nach einem der vorhergehenden Ansprüche, wobei ein Winkel (413) zwischen der zweiten Richtung (409) und der Mittelachse (410) zwischen 75 und 85 Grad liegt.

10. Gasturbinentriebwerk (10) nach einem der vorhergehenden Ansprüche, wobei die erste und zweite Lamelle (402, 406) symmetrisch um die Mittelachse (410) angeordnet sind.

11. Gasturbinentriebwerk (10) nach einem der vorhergehenden Ansprüche, umfassend einen Betätigungsmechanismus (701), der für eine synchrone Drehung der ersten und zweiten Vielzahl von Stäben (404, 408) zwischen der offenen und der geschlossenen Position die erste und zweite Lamelle (402, 406) verbindet.

12. Gasturbinentriebwerk (10) nach Anspruch 11, ferner umfassend einen Aktor (702), der mit einer Aktorstange (703) verbunden ist, die dazu konfiguriert ist, eine Drehung der ersten und zweiten Vielzahl von Stäben (404, 408) zwischen der offenen und der geschlossenen Position hervorzurufen.

13. Gasturbinentriebwerk (10) nach einem der vorangehenden Ansprüche, wobei die erste und zweite Vielzahl von Stäben (404, 408) dazu angeordnet sind, in der offenen Position in einem Winkel zwischen 10 und 45 Grad bezogen auf eine Ebene ausgerichtet zu sein, die sich über die Luftaustrittsöffnung (401) erstreckt.

14. Gasturbinentriebwerk (10) nach Anspruch 13, wobei die erste und zweite Vielzahl von Stäben (404, 408) dazu angeordnet sind, in der offenen Position in einem Winkel zwischen 30 und 45 Grad bezogen auf eine Ebene ausgerichtet zu sein, die sich über die Luftaustrittsöffnung (401) erstreckt.

## Revendications

1. Moteur à turbine à gaz (10) pour un aéronef comprenant :
un noyau de moteur (11) comprenant une turbine (19), un compresseur (14) et un arbre de noyau (26) raccordant la turbine au compresseur ;
une soufflante (23) située en amont du noyau de moteur, la soufflante comprenant une pluralité d'aubes de soufflante ;
un conduit de dérivation (22) en aval de la soufflante (23) ;
un conduit de prélèvement agencé pour recevoir l'air de prélèvement en provenance du compresseur (14) ; et
un ensemble d'ouïes comprenant :
une ouverture d'évacuation d'air (401) ;
une première ouïe (402) s'étendant à travers une première partie (403) de l'ouverture d'évacuation d'air (401) et comprenant une première pluralité de lamelles (404) montées chacune de manière pivotante pour pivoter par rapport à une première direction (405) entre une position fermée pour obstruer l'air s'écoulant à travers la première partie (403) de l'ouverture d'évacuation d'air (401) et une position ouverte pour permettre à l'air de s'écouler à travers la première partie (403) de l'ouverture d'évacuation d'air (401) ; et
une seconde ouïe (406) s'étendant à travers une seconde partie (407) de l'ouverture d'évacuation d'air (401) et comprenant une seconde pluralité de lamelles (408) montées chacune de manière pivotante pour pivoter par rapport à une seconde direction (409) entre une position fermée pour obstruer l'air s'écoulant à travers la seconde partie (407) de l'ouverture d'évacuation d'air (401) et
une position ouverte pour permettre à l'air de s'écouler à travers la seconde partie (407) de l'ouverture d'évacuation d'air (401), dans lequel l'ouverture d'évacuation est agencée pour diriger l'air de prélèvement en provenance du conduit de prélèvement dans le conduit de dérivation avec les première et seconde pluralités de lamelles en position ouverte,
**caractérisé en ce que** les première et seconde directions (405, 409) sont inclinées l'une par rapport à l'autre de sorte que l'air sortant par l'ouverture d'évacuation d'air (401) avec la première et la seconde pluralité de lamelles (404, 408) en position ouverte diverge en s'éloignant d'un axe central (410) de l'ensemble d'ouïes (400) s'étendant entre les première et seconde parties (403, 407) de l'ouverture d'évacuation d'air (401).

2. Moteur à turbine à gaz (10) selon la revendication 1, comprenant en outre :
une pluralité d'aubes directrices de sortie de soufflante (501) ; et
un pylône (502), agencé dans le conduit de dérivation (22) en aval des aubes directrices de sortie de soufflante (501),
dans lequel l'ouverture d'évacuation d'air (401) est agencée en aval des aubes directrices de sortie de soufflante (501) et en amont du pylône (502).

3. Moteur à turbine à gaz (10) selon la revendication 2, dans lequel l'axe central (410) de l'ensemble d'ouïes (400) est aligné avec un axe central du pylône (502).

4. Moteur à turbine à gaz (10) pour un aéronef comprenant :
un noyau de moteur (11) comprenant une turbine (19), un compresseur (14) et un arbre de noyau (26) raccordant la turbine au compresseur ;
une soufflante (23) située en amont du noyau de moteur, la soufflante comprenant une pluralité d'aubes de soufflante ;
un conduit de dérivation (22) en aval de la soufflante (23) ;
un conduit agencé pour recevoir l'air en provenance du conduit de dérivation (22) ; et
un ensemble d'ouïes comprenant :
une ouverture d'évacuation d'air (401) ;
une première ouïe (402) s'étendant à travers une première partie (403) de l'ouverture d'évacuation d'air (401) et comprenant une première pluralité de lamelles (404) montées chacune de manière pivotante pour pivoter par rapport à une première direction (405) entre une position fermée pour obstruer l'air s'écoulant à travers la première partie (403) de l'ouverture d'évacuation d'air (401) et une position ouverte pour permettre à l'air de s'écouler à travers la première partie (403) de l'ouverture d'évacuation d'air (401) ; et
une seconde ouïe (406) s'étendant à travers une seconde partie (407) de l'ouverture d'évacuation d'air (401) et comprenant une seconde pluralité de lamelles (408) montées chacune de manière pivotante pour pivoter par rapport à une seconde direction (409) entre une position fermée pour obstruer l'air s'écoulant à travers la seconde partie (407) de l'ouverture d'évacuation d'air (401) et une position ouverte pour permettre à l'air de s'écouler à travers la seconde partie (407) de l'ouverture d'évacuation d'air (401), dans lequel l'ouverture d'évacuation est agencée pour extraire l'air en provenance du conduit de dérivation (22) avec les première et seconde pluralités de lamelles (404, 408) en position ouverte et diriger l'air extrait dans le conduit (702, 1102),
**caractérisé en ce que** les première et seconde directions (405, 409) sont inclinées l'une par rapport à l'autre de sorte que l'air sortant par l'ouverture d'évacuation d'air (401) avec la première et la seconde pluralité de lamelles (404, 408) en position ouverte diverge en s'éloignant d'un axe central (410) de l'ensemble d'ouïes (400) s'étendant entre les première et seconde parties (403, 407) de l'ouverture d'évacuation d'air (401).

5. Moteur à turbine à gaz (10) selon la revendication 4, dans lequel les première et seconde pluralités de lamelles (404, 408) sont agencées pour être alignées en position ouverte à un angle compris entre 10 et 35 degrés par rapport à un plan s'étendant à travers l'ouverture d'évacuation d'air (401).

6. Moteur à turbine à gaz (10) selon l'une quelconque des revendications 4 et 5, dans lequel le conduit (702, 1102) fournit de l'air de refroidissement pour la turbine (19).

7. Moteur à turbine à gaz (10) selon l'une quelconque des revendications précédentes, dans lequel un angle (411) entre la première direction (405) et la seconde direction (409) est compris entre 10 et 30 degrés.

8. Moteur à turbine à gaz (10) selon l'une quelconque des revendications précédentes, dans lequel un angle (412) entre la première direction (405) et l'axe central (410) est compris entre 75 et 85 degrés.

9. Moteur à turbine à gaz (10) selon l'une quelconque des revendications précédentes, dans lequel un angle (413) entre la seconde direction (409) et l'axe central (410) est compris entre 75 et 85 degrés.

10. Moteur à turbine à gaz (10) selon l'une quelconque des revendications précédentes, dans lequel les première et seconde ouïes (402, 406) sont agencées de manière symétrique par rapport à l'axe central (410).

11. Moteur à turbine à gaz (10) selon l'une quelconque des revendications précédentes, comprenant un mécanisme d'actionnement (701) raccordant les première et seconde ouïes (402, 406) pour une rotation synchrone de la première et la seconde pluralité de lamelles (404, 408) entre les positions ouverte et fermée.

12. Moteur à turbine à gaz (10) selon la revendication 11, comprenant en outre un actionneur (702) raccordé à une tige d'actionneur (703) configurée pour provoquer la rotation des première et seconde pluralités de lamelles (404, 408) entre les positions ouverte et fermée.

13. Moteur à turbine à gaz (10) selon l'une quelconque des revendications précédentes, dans lequel les première et seconde pluralités de lamelles (404, 408) sont agencées pour être alignées en position ouverte à un angle compris entre 10 et 45 degrés par rapport à un plan s'étendant à travers l'ouverture d'évacuation d'air (401).

14. Moteur à turbine à gaz (10) selon la revendication 13, dans lequel les première et seconde pluralités de lamelles (404, 408) sont agencées pour être alignées en position ouverte à un angle compris entre 30 et 45 degrés par rapport à un plan s'étendant à travers l'ouverture d'évacuation d'air (401).
